# EUROPÄISCHE PATENTSCHRIFT

(11) **EP 2 477 856 B1**
(45) Veröffentlichungstag und Bekanntmachung des Hinweises auf die Patenterteilung: **06.11.2013**
(21) Anmeldenummer: 10739331.6
(22) Anmeldetag: 23.07.2010
(51) Int. Cl.: B60S 1/40, B60S 1/38

(54) **ANSCHLUSSVORRICHTUNG**
CONNECTING DEVICE
DISPOSIRIF DE CONNECTION

(30) Priorität: 15.09.2009 DE 102009029458
(43) Veröffentlichungstag der Anmeldung: 25.07.2012
(73) Patentinhaber: Robert Bosch GmbH, 70442 Stuttgart (DE)
(72) Erfinder: BONROY, Jan, B-3001 Heverlee (BE); SAEVELS, Peter, B-3384 Attenrode (BE); AZNAG, Mohamed, B-3271 Scherpenheuvel-Zichem (BE); COART, Kris, B-3400 Landen (BE); WINDMOLDERS, Eric, B-3510 Kermt (BE); VERTONGEN, Robert, B-3550 Heusden-Zolder (BE)
(86) Internationale Anmeldenummer: PCT/EP2010/060699
(87) Internationale Veröffentlichungsnummer: WO 2011/032761

(56) Entgegenhaltungen:
- EP-A1- 1 484 224
- DE-A1- 10 347 637

## Beschreibung

### Stand der Technik

Die Erfindung geht von einer Anschlussvorrichtung nach dem Oberbegriff des Anspruchs 1 aus.

Aus der DE 103 47 637 A1 ist eine gattungsgemäße Anschlussvorrichtung bekannt. Durch sie wird ein Wischblatt in Flachbalkenbauweise mit einem Wischarm gelenkig verbunden. Das Wischblatt umfasst eine Wischleiste mit zwei seitlich in Längsnuten eingesetzten Federschienen, die als Tragelement dienen, und an denen ein Anschlusselement in Form einer Blechkralle befestigt ist. Das Anschlusselement besitzt einen in Längsrichtung des Wischblatts verlaufenden Mittelsteg, der eine quer dazu verlaufende Gelenkachse trägt. Auf der Gelenkachse sind zu beiden Seiten des Längsstegs Naben eines Adapters gelagert, die in Federzungen angeordnet sind. Diese bilden seitlich nachgiebige Teile von Seitenwänden des Adapters. Die Federzungen sind bis auf eine Seite, die der Wischleiste abgewandt ist, durch Spalte von den Seitenwänden getrennt.

Der Adapter besitzt neben den Seitenwänden, die durch eine Deckwand miteinander verbunden sind, eine vordere Stirnwand, die zu den Seitenwänden und zur Deckwand hin einen Vorsprung aufweist. Dieser bildet Anlageflächen für eine Stirnkante eines Verbindungselements, das an einem Wischarm angeformt ist. In der vorderen Stirnwand ist ferner ein Anschlussprofil für ein Spoilerteil vorgesehen, das auf den Federschienen befestigt ist und das Wischblatt auf der der Wischlippe abgewandten Seite abdeckt. In Längsrichtung zu beiden Seiten des Anschlusselements ist jeweils ein Spoilerteil angeordnet.

Zur Versteifung der Seitenwände des Adapters sind zwischen den Seitenwänden zahlreiche Querwände und Versteifungsrippen vorgesehen. Diese dienen außerdem zur seitlichen Führung des Adapters am Längsstegs des Anschlusselements.

Bei der Montage wird das Verbindungselement quer zur Längsrichtung des Adapters in Richtung auf die Wischleiste über den Adapter geschoben, bis die Führungsschienen an den unteren Längskanten der Seitenwände des Verbindungselements an Federzungen mit Rastnasen einrasten. In montiertem Zustand liegen die zum freien Ende des Wischblatts weisenden Stirnseiten der Führungsschienen an Führungsschienen des Adapters an, die unter die Seitenwände des Verbindungselements greifen. Ferner liegt die Stirnkante des Verbindungselements an dem Vorsprung der vorderen Stirnwand des Adapters an, der im Bereich der angrenzenden Führungsschiene eine Hinterschneidung aufweist, die zur vorderen Stirnkante des Verbindungselements passt.

Der Adapter besitzt in seiner Deckwand eine Federzunge mit einer nach außen weisenden Taste. Die Federzunge verläuft in Längsrichtung des Wischblatts und ist an der zur vorderen Stirnwand weisenden Seite mit der Deckwand verbunden, während sie im Übrigen durch einen Spalt von der Deckwand getrennt ist. Im montierten Zustand greift die Taste in eine entsprechende Öffnung des Verbindungselements und sichert somit die montierte Position des Adapters in Längsrichtung zum Verbindungselement.

Das Wischblatt kann auch in Längsrichtung am Wischarm montiert werden, indem das Verbindungselement von der hinteren Stirnwand des Adapters über diesen geschoben wird, bis die Taste in die entsprechende Öffnung des Verbindungselements einrastet. Dabei greifen die Führungsschienen des Verbindungselements unter die Rasthaken der seitlichen Federzungen des Adapters.

Aus der DE 60 2004 010 644 ist eine ähnliche Anschlussvorrichtung bekannt, bei der die Federzunge an der Deckwand des Adapters an ihrer der Rückwand zugewandten Seite befestigt ist. Die Rückwand selbst ist auf einen Quersteg reduziert, sodass die Anschlussquerschnitte zu den Seitenwänden sehr klein sind.

### Offenbarung der Erfindung

Nach der Erfindung weisen die nach außen weisenden Wände des Adapters, nämlich die Seitenwände, die Deckwand und die Stirnwände, eine allgemeine Wandstärke von mindestens zwei Millimetern auf. Ferner sind die Naben als Sacklöcher ausgebildet, deren Zylinderflächen radiale Gleitflächen und deren Stirnflächen axiale Gleitflächen bilden, die hochglanzpoliert sind, mit einem arithmetischen Mittenraumwert von Ra < 0,2 µ. Außerdem sind die Gleitflächen zwischen den Naben und der Gelenkachse die einzigen Kontaktflächen zwischen dem Anschlusselement und dem Adapter. Hierbei wirken die Gleitflächen an den Stirnflächen der Gelenkachse und am Boden der Sacklöcher als Axiallager, während die radialen Gleitflächen an den Zylinderflächen der Naben und am Umfang der Gelenkachse als Radiallager dienen. Durch die besondere Oberflächengüte im Lagerbereich erzielt man eine geringe Lagerreibung und eine präzise Führung zwischen der Gelenkachse und den Naben. Da der Kontakt zwischen dem Adapter und dem Anschlusselement auf die genannten Gleitflächen beschränkt ist, entstehen in der entfindungsgemäßen Anschlussvorrichtung keine weiteren Reibungsverluste. Die durch den Wegfall der Querwände an sich reduzierte Steifigkeit des Adapters wird durch die größere Wandstärke der nach außen weisenden Wände kompensiert. Dies hat ferner den Vorteil, dass bei ausreichender Nachgiebigkeit der Seitenwände im Bereich der Naben die Anbindung der Naben relativ steif ist, sodass ein Verlust der Lagerung oder Seitenführung bei einem Stoß oder einer Blockierung des Scheibenwischers nicht zu befürchten ist. Schließlich entfallen seitliche Federzungen, die bei einer ungeschickten Montage leicht abbrechen können.

Zur freizügigen Dimensionierung der Naben ist zweckmäßig, dass diese in Nabenstutzen angeordnet sind, die an den Innenseiten der Seitenwände nach innen vorstehen. Gleichzeitig können im Bereich der Nabenstutzen an der Außenseite der Seitenwände Nischen vorgesehen werden. Durch diese kann die gewünschte Nachgiebigkeit im Bereich der Naben modifiziert werden, z.B. auch durch Versteifungsrippen, die in den Nischen angeordnet sind und mit der Außenseite der an die Nische angrenzenden Seitenwand etwa bündig abschließen. Um die Nachgiebigkeit der Seitenwände im Bereich der Versteifungsrippen des Adapters nicht zu behindern, wenn der Adapter im Verbindungselement montiert ist, besitzt das Verbindungselement im Bereich der Versteifungsrippen Freistiche, sodass die Versteifungsrippen seitlich ausweichen können, ohne sich an den Seitenwänden des Verbindungselements abzustützen.

Um eine möglichst spielfreie Führung des Wischblatts quer zur Längsrichtung zu erhalten, ist es zweckmäßig, dass die Länge der Gelenkachse ein geringes Übermaß gegenüber dem Abstand der axialen Gleitflächen der Naben voneinander hat, sodass die axialen Gleitflächen im montierten Zustand mit einer Vorspannung an den Stirnflächen der Gelenkachse anliegen.

Gemäß einer weiteren Ausgestaltung der Erfindung besitzt der Adapter in Längsrichtung zu beiden Seiten der Nischen an den Außenseiten der Seitenwände Kontaktflächen, die in montiertem Zustand eng an den Innenseiten der Seitenwände des Verbindungselements anliegen. Diese Maßnahme hat den Vorteil, dass eine Querbewegung des Adapters im Verbindungselement vermieden wird. Ferner ist in Verbindung mit der präzisen Lagerung und Führung durch die hochwertige Lagerung der Gelenkachse die mögliche Torsionsbewegung um die Längsachse sehr eingeschränkt.

Nach einer weiteren Ausgestaltung der Erfindung ist die Federzunge mit der hinteren Stirnwand verbunden und bildet mit der Deckwand des Adapters einen Spalt, wobei die Taste der der hinteren Stirnwand abgewanden Seite der Federzunge nach außen über die Federzunge vorsteht und in montiertem Zustand durch eine Öffnung in der Deckwand des Verbindungselements greift. Hierdurch erreicht man, dass die Federzunge in die Montagerichtung auf Druck beansprucht wird, was in Bezug auf die Festigkeit und ein ungewolltes Lösen günstiger ist. Ferner kann der kritische Anschlussquerschnitt zwischen der Federzunge und den Seitenwänden deutlich verbessert werden, wenn die hintere Stirnwand des Adapters von der Deckwand bis zur unteren Kante der Seitenwände reicht. Durch die geschlossene hintere Stirnwand wird außerdem vermieden, dass sich die Adapter beim Transport ineinander verhaken. Ferner ist es günstig, dass die Federzunge an ihrem der hinteren Stirnwand abgewandten Ende mindestens einen Vorsprung besitzt, der in montiertem Zustand an der Innenseite der Deckwand des Verbindungselements anliegt. Somit kann der Adapter für Verbindungselemente mit unterschiedlichen Öffnungen verwendet werden, ohne dass die Gefahr besteht, dass die Taste mit dem Federelement durch die Öffnung des Verbindungselements nach außen vorsteht.

Nach einer weiteren Ausgestaltung der Erfindung wird vorgeschlagen, dass an dem der hinteren Stirnwand zugewandten Ende der Seitenwände in Aussparungen Sicherungsblöcke vorgesehen sind, die mit den Aussparungen Montagekanäle für Führungsschienen an den unteren Kanten der Seitenwände des Verbindungselements bilden, wobei sich die Montagekanäle zu der hinteren Stirnwand hin erweitern. Die Montagekanäle erlauben ein leichtes Einfädeln der Führungsschienen. Ferner sind die Sicherungsblöcke so stark dimensioniert, dass sie weder bei der Montage noch während des Betriebs beschädigt werden können.

Zur leichteren Montage des Anschlusses einer erfindungsgemäßen Anschlussvorrichtung besitzt der Adapter in seiner Deckwand eine Montageöffnung, in die ein Greifer eines Montagewerkzeugs einer Montageeinrichtung in Montagerichtung eingeführt und in Öffungsrichtung gespreizt wird, sodass der so gehaltene Adapter über die Gelenkachse des Anschlusselements geschoben werden kann, worauf die Gelenkachse mit den Naben verrastet.

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:

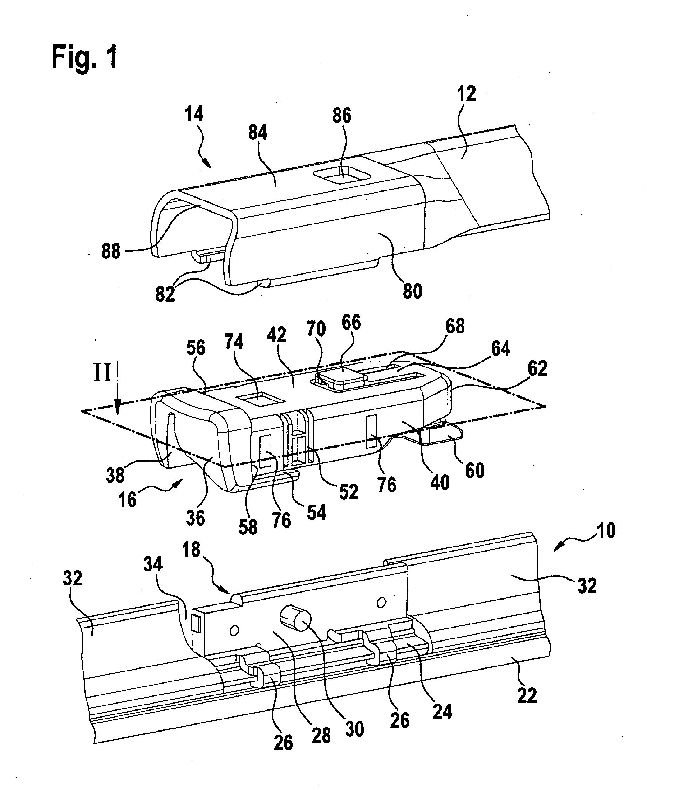

Fig. 1 eine erfindungsgemäße Anschlussvorrichtung in einer perspektivischen Explosionsdarstellung,

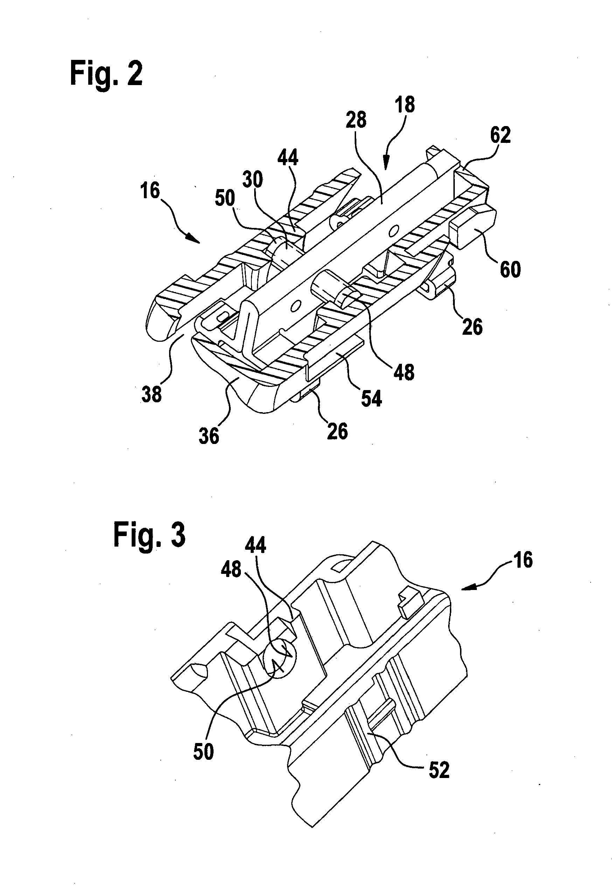

Fig. 2 einen perspektivischen Schnitt eines Adapters mit einem Anschlusselement entsprechend der Ebene II in Fig. 1,
Fig. 3 eine perspektivische Teilansicht des Adapters von unten,

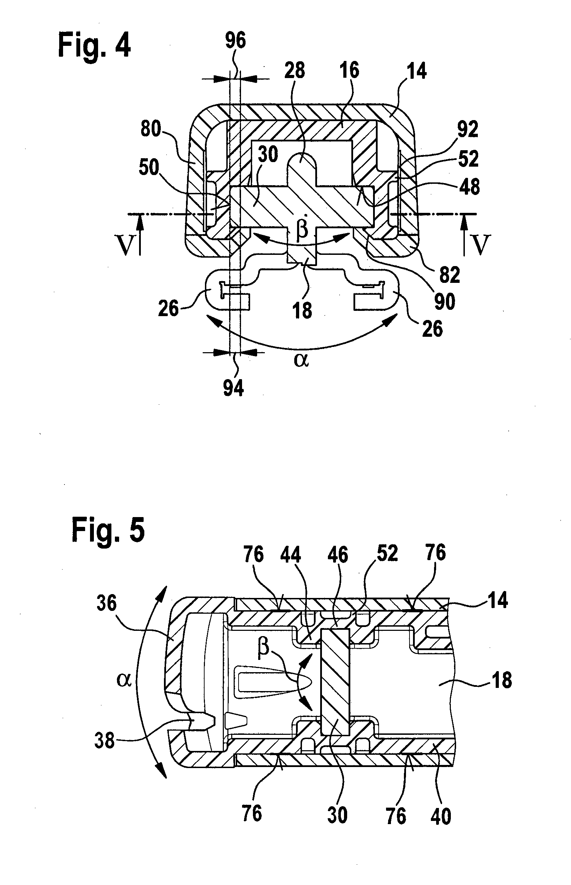

Fig. 4 einen Querschnitt durch die erfindungsgemäße Anschlussvorrichtung,
Fig. 5 einen Längsschnitt entsprechend der Linie V-V in Fig. 4,

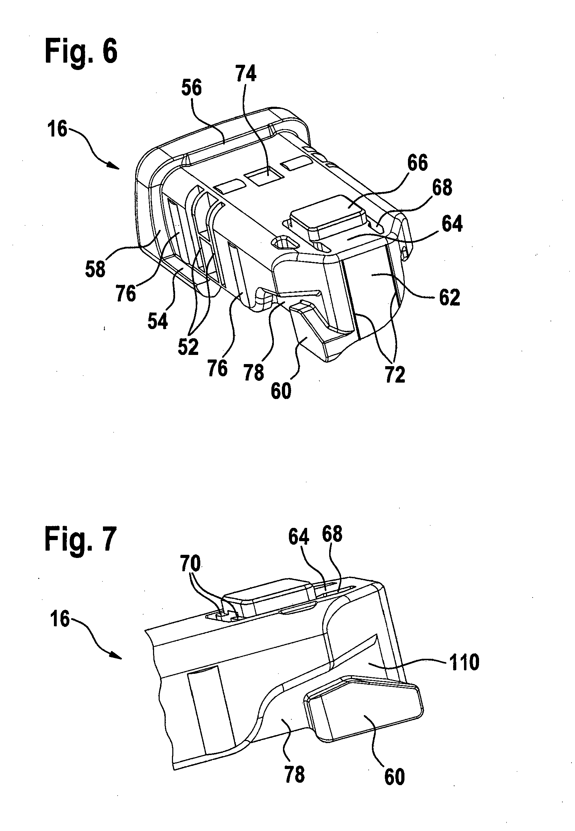

Fig. 6 eine perspektivische Ansicht des Adapters von oben,
Fig. 7 eine perspektivische Teilansicht des Adapters von der Seite und

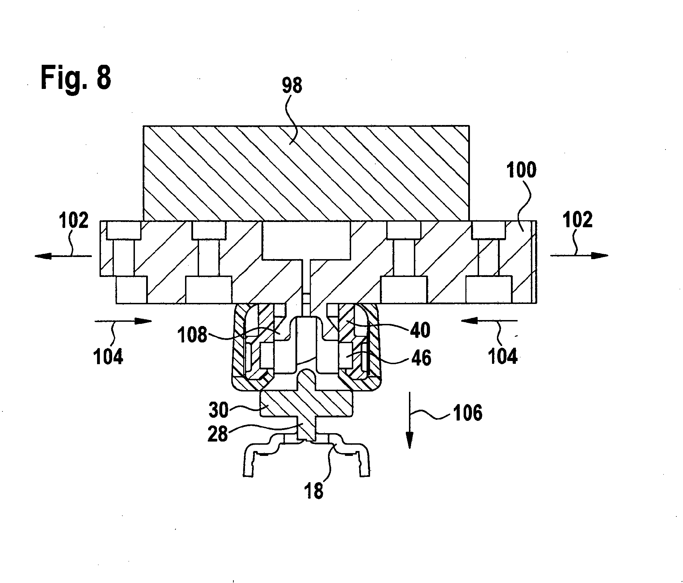

Fig. 8 einen schematischen Querschnitt durch eine Montageeinrichtung mit dem Adapter und dem Anschlusselement.

Ein Wischblatt 10 in Flachbalkenbauweise umfasst eine Wischleiste 20 mit einer Wischlippe 22, und zwei als Tragelement 24 dienende Federschienen, die in seitliche Längsnuten der Wischleiste 20 eingesetzt sind. Auf den aus der Wischleiste 20 seitlich vorstehenden Teilen des Tragelements 24 ist im mittleren Bereich ein Anschlusselement 18 in Form einer Blechkralle mittels Krallen 26 befestigt. Die Krallen 26 umfassen das Tragelement 24 an den äußeren Längsseiten und sind an ihrem anderen Ende mit einem Mittelsteg 28 verbunden. Dieser verläuft in Längsrichtung des Wischblatts 10 und trägt eine zu beiden Seiten vorstehende Gelenkachse 30. In Längsrichtung zu beiden Seiten des Anschlusselements 18 schließen sich Spoilerteile 32 an, die zwischen sich ein Fenster 34 für das Anschlusselement 18 bilden und mit Führungsprofilen auf dem Tragelement 24 sitzen.

Zum gelenkigen Verbinden des Wischblatts 10 mit einem Wischarm 12 dient eine Anschlussvorrichtung, die das Anschlusselement 18, einen Adapter 16 und ein Verbindungselement 14 umfasst, das fest mit dem Wischarm 12 verbunden ist. Der Adapter 16 besitzt zwei Seitenwände 40, die durch eine Deckwand 42, eine vordere Stirnwand 36 und eine hintere Stirnwand 62 miteinander verbunden sind. Diese Wände 36, 40, 42, 62 besitzen eine Wandstärke von mindestens zwei Millimetern, während der durch sie eingeschlossene Innenraum frei ist von Querwänden, sodass zwischen dem Mittelsteg 28 des Anschlusselements 18 und dem Adapter 16 kein unmittelbarer Kontakt besteht. Durch die Wandstärke und die äußere Konfiguration des Adapters 16 kann die Steifigkeit des Adapters 16 entsprechend den Einsatzbedingungen modifiziert werden.

Die vordere Stirnwand 36 besitzt ein Anschlussprofil 38 für das zugeordnete Spoilerteil 32. Zum Wischarm 12 hin besitzt die vordere Stirnwand 36 einen Vorsprung 56 gegenüber der Deckwand 42 und den Seitenwänden 40, an denen in montiertem Zustand eine Stirnkante 88 des Verbindungselements 14 anliegt. Der Vorsprung 56 hat an seinen Seiten Hinterschneidungen 58, in die entsprechende konvexe Gestaltungen der Stirnkante 88 des Verbindungselements 14 passen. An der der Wischleiste 20 zugewandten Kante der Seitenwände 40 schließt sich an den Vorsprung 56 eine kurze Führungsrippe 54 bündig an. Die Führungsrippe 54 unterfasst in montiertem Zustand den zugeordneten Teil der untern Kante der Seitenwand 80 des Verbindungselements 14. An den freien Stirnseiten der Führungsrippen 54 schließen sich in montiertem Zustand in Längsrichtung Führungsschienen 82 an, die an den unteren Kanten der Seitenwände 80 des Verbindungselements 14 nach innen vorstehen und nach der Montage die Seitenwände 40 des Adapters von unten unterfassen.

Der Adapter 16 ist mittels Naben 46 auf der Gelenkachse 30 schwenkbar gelagert. Die Naben 46 befinden sich in Nabenstutzen 44 an der Innenseite der Seitenwände 40. Sie besitzen radiale Gleitflächen 48, die zusammen mit den Umfangsflächen der Gelenkachse 30 Radiallager bilden, und axiale Gleitflächen 50, die zusammen mit den Stirnflächen der Gelenkachse 30 Axiallager bilden. Die Gleitflächen 48 und 50 sind hochglanzpoliert und haben einen arithmetischen Raumittenwert Ra < 0,2 µ. Dadurch erreicht man eine hohe Präzision, große Dauerfestigkeit und geringe Reibung, sodass eine präzise seitliche Führung und Torsionsstabilität des Wischblatts 10 und damit eine hohe Wischqualität gewährleistet ist.

Die Gelenkachse 30 besitzt in ihrer Länge ein geringfügiges Übermaß gegenüber dem Abstand der axialen Gleitflächen 50 der Naben 46 zueinander, sodass eine entsprechende Vorspannung in montiertem Zustand erreicht wird. Aus dem Übermaß ergibt sich vor der Montage eine erste Überlappung 94 von beispielsweise 1 mm und nach der Montage eine zweite Überlappung 96 von beispielsweise 0,8 mm. Dadurch ist der mögliche Torsionswinkel α um die Längsachse des Wischblatts 10 zwischen dem Adapter 16 und dem Anschlusselement 18 sehr gering.

Im Bereich der Nabenstutzen 44 befinden sich an der Außenseite der Seitenwände 40 Nischen 41, in denen Versteifungsrippen 52 vorgesehen sind, die bündig mit den zugeordneten Seitenwänden 40 ausgebildet sind. Sie dienen zur Modifizierung der elastischen Nachgiebigkeit der Seitenwände 40 im Bereich der Naben 46. Damit die Naben 46 nach außen nachgeben können, befinden sich an den Innenseiten der Seitenwände 80 des Verbindungselements 14 Freistiche 92. In Längsrichtung zu beiden Seiten der Nischen 41 sind an den Außenseiten der Seitenwände 40 Kontaktflächen 76 vorgesehen, an denen der Kontakt zwischen dem Adapter 16 und dem Verbindungselement 14 stattfindet. Durch die präzise eindeutige Abstützung des Adapters 16 im Verbindungselement 14 wird die seitliche Relativbewegung eingeschränkt und ebenfalls der Torsionswinkel β zwischen diesen Teilen minimiert.

Der Adapter 16 besitzt in seiner Deckwand 42 eine Federzunge 64 mit einer nach außen weisenden Taste 66, die in montiertem Zustand durch eine entsprechende Öffnung 86 in der Deckwand 84 des Verbindungselements 14 ragt und etwa bündig mit der Oberfläche der Deckwand 84 abschließt. Die Federzunge 64 erstreckt sich in Längsrichtung des Wischblatts 10 und ist an ihrer der hinteren Stirnwand 62 zugewandten Seite mit dieser verbunden, während sie im Übrigen durch einen Spalt 68 von der Deckwand 42 getrennt ist. Damit die Federzunge 64 mit der Taste 66 bei einer Belastung in Demontagerichtung nicht ungewollt weit aus der Öffnung 86 des Verbindungselements 14 austreten kann, besitzt die Federzunge 64 an der der hinteren Stirnwand 62 abgewandten Seite mindestens einen Vorsprung 70, der in montiertem Zustand von innen an der Deckwand 84 des Verbindungselements 14 anliegt. Bei einer Belastung in Löserichtung wird die Taste 66 somit am Rand der Öffnung 86 gehalten. Die auf die Federzunge 64 ausgeübten Druckkräfte werden dabei an der hinteren Stirnwand 62 abgestützt, die bis zum unteren Rand der Seitenwände 40 geführt ist, wodurch die Anschlussquerschnitte 72 großflächig sind und eine große Festigkeit aufweisen. Die geschlossene hintere Stirnwand verhindert ferner, dass sich die Adapter während des Transports verhaken.

Zur Montage des Wischblatts 10 an den Wischarm 12 wird der montierte Adapter 16 in Längsrichtung in das Verbindungselement 14 eingeführt, wobei die Führungsschienen 82 durch seitliche Montagekanäle 110 geführt werden. Die Montagekanäle 110, die sich zur hinteren Stirnwand 62 erweitern, werden durch seitliche Aussparungen 78 in den Seitenwänden 40 und durch Sicherungsblöcke 60 gebildet, die in den Aussparungen angeordnet sind. Die Sicherungsblöcke 60 verhindern eine geradlinige Demontagebewegung.

Zur automatischen Montage des Adapters 16 am Anschlusselement 18 dient eine Montageöffnung 74 in der Deckwand 42 des Adapters 16. Durch sie wird in Montagerichtung 106 ein Greifer 108 eines Montagewerkzeugs 100 einer Montageeinrichtung 98 eingeführt. Durch eine Öffnungsbewegung des Greifers 108 in

Öffnungsrichtung 102 wird der Adapter 16 gespannt und durch eine Zustellbewegung in Montagerichtung 106 über die Gelenkachse 30 des Anschlusselements 18 geschoben. Nach erfolgter Montage wird der Greifer 108 in Schließrichtung 104 verfahren, wodurch er sich vom Adapter 16 löst, und durch die Montageöffnung 74 entgegen der Montagerichtung 106 entfernt. Zur leichteren Montage besitzen die Naben 46 Montageschrägen 90 an den zur Gelenkachse 30 weisenden Kanten.

## Patentansprüche

1. Anschlussvorrichtung, die ein an einem Wischblatt (10) in Flachbalkenbauweise befestigtes Anschlusselement (18) und einen mit diesem gelenkig verbundenen Adapter (16) sowie ein mit einem Wischarm (12) verbundenes Verbindungselement (14) aufweist, in dessen u-förmiges Querschnittprofil der Adapter (16) eingesetzt und durch eine an seiner Deckwand (42) angeordnete Federzunge (64) mit einer Taste (66) fixiert ist, wobei das Anschlusselement (18) einen in Längsrichtung des Wischblatts (10) verlaufenden Mittelsteg (28) besitzt, der eine an seinen Längsseiten vorstehende Gelenkachse (30) trägt, die in seitlich nachgiebigen Naben (46) in Seitenwänden (40) des Adapters (16) gelagert ist, **dadurch gekennzeichnet, dass** die nach außen weisenden Wände des Adapters (16), nämlich die Seitenwände (40), die Deckwand (42) und die Stirnwände (36, 62), eine allgemeine Wandstärke von mindestens zwei Millimetern aufweisen und die Naben (46) als Sacklöcher ausgebildet sind, deren Zylinderflächen radiale Gleitflächen (48) und deren Stirnflächen axiale Gleitflächen (50) bilden, die Hochglanz poliert sind mit einem arithmetischen Mittenrauwert von Ra < 0,2 µ, und dass die Gleitflächen (48, 50) die einzigen Kontaktflächen zwischen dem Anschlusselement (18) und dem Adapter (16) sind.

2. Anschlussvorrichtung nach Anspruch 1, **dadurch gekennzeichnet, dass** die Naben (46) in Nabenstutzen (44) angeordnet sind, die an den Innenseiten der Seitenwände (40) nach innen vorstehen.

3. Anschlussvorrichtung nach Anspruch 2, **dadurch gekennzeichnet, dass** im Bereich der Nabenstutzen (44) an der Außenseite der Seitenwände (40) Nischen (41) vorgesehen sind, in denen Versteifungsrippen (52) angeordnet sind, die mit der Außenseite der an die Nische (41) angrenzenden Seitenwand (40) etwa bündig abschließen.

4. Anschlussvorrichtung nach Anspruch 3, **dadurch gekennzeichnet, dass** das Verbindungselement (14) an den Innenseiten seiner Seitenwände (80) im Bereich der Versteifungsrippen (52) des Adapters (16) Freistiche (92) aufweist.

5. Anschlussvorrichtung nach einem der vorhergehenden Ansprüche, **dadurch gekennzeichnet, dass** die Länge der Gelenkachse (30) ein geringes Übermaß gegenüber dem Abstand der axialen Gleitflächen (50) der Naben (46) voneinander hat, sodass die axialen Gleitflächen (50) im montierten Zustand mit einer Vorspannung an den Stirnflächen der Gelenkachse (30) anliegen.

6. Anschlussvorrichtung nach Anspruch 3, **dadurch gekennzeichnet, dass** der Adapter (16) in Längsrichtung zu beiden Seiten der Nischen (41) an den Außenseiten der Seitenwände (40) Kontaktflächen (76) besitzt, die im montierten Zustand eng an den Innenseiten der Seitenwände (80) des Verbindungselements (14) anliegen.

7. Anschlussvorrichtung nach einem der vorhergehenden Ansprüche, **dadurch gekennzeichnet, dass** die Federzunge (64) mit der hinteren Stirnwand (62) verbunden ist und mit der Deckwand (42) des Adapters (16) einen Spalt (68) bildet, wobei die Taste (66) an der der hinteren Stirnwand (62) abgewandten Seite der Federzunge (64) nach außen über die Federzunge (64) vorsteht und im montierten Zustand durch eine Öffnung (86) in der Deckwand (84) des Verbindungselements (14) greift.

8. Anschlussvorrichtung nach Anspruch 7, **dadurch gekennzeichnet, dass** die Federzunge (64) an ihrem der hinteren Stirnwand (62) abgewandten Ende mindestens einen Vorsprung (70) besitzt, der im montierten Zustand an der Innenseite der Deckwand (84) des Verbindungselements (14) anliegt.

9. Anschlussvorrichtung nach einem der vorhergehenden Ansprüche, **dadurch gekennzeichnet, dass** die hintere Stirnwand (62) des Adapters (16) von der Deckwand (42) bis zu unteren Kante der Seitenwände (40) reicht, sodass sich großflächige Anschlussquerschnitte (72) ergeben.

10. Anschlussvorrichtung nach einem der vorhergehenden Ansprüche, **dadurch gekennzeichnet, dass** an dem der hinteren Stirnwand (62) zugewandten Ende an den Außenseiten der Seitenwände (40) in Aussparungen (78) Sicherungsblöcke (60) vorgesehen sind, die mit den Aussparungen (78) Montagekanäle (110) für Führungsschienen (82) an den unteren Kanten der Seitenwände (80) des Verbindungselements (14) bilden, wobei sich die Montagekanäle (110) zu der hinteren Stirnwand (62) hin erweitern.

## Claims

1. Fitting device, having a fitting element (18) fastened to a wiper blade (10) in flat beam design and an adapter (16) articulated to it, as well as a connection element (14) joined to a wiper arm (12), in whose U-shaped cross sectional profile the adapter (16) is installed and fixed by a flexible tongue (64) with a key (66) arranged on its top wall (42), while the fitting element (18) has a central web (28) running in the lengthwise direction of the wiper blade (10), carrying a link axis (30) projecting from its lengthwise sides, being mounted in sideways resilient hubs (46) in side walls (40) of the adapter (16), **characterized in that** the outwardly pointing walls of the adapter (16), namely, the side walls (40), the top wall (42) and the end walls (36, 62), have a general wall thickness of at least two millimeters, and the hubs (46) are fashioned as blind holes, whose cylindrical surfaces form radial sliding surfaces (48) and whose end faces form axial sliding surfaces (50) that are mirror polished, with an arithmetic mean peak to valley value of Ra < 0.2 µ, and the sliding surfaces (48, 50) are the only contact surfaces between the fitting element (18) and the adapter (16).

2. Fitting device according to Claim 1, **characterized in that** the hubs (46) are arranged in stub hubs (44) which project inward from the insides of the side walls (40).

3. Fitting device according to Claim 2, **characterized in that** niches (41) are provided in the area of the stub hubs (44) on the outside of the side walls (40), in which stiffening ribs (52) are arranged, that are roughly flush with the outside of the side wall (40) adjacent to the niche (41).

4. Fitting device according to Claim 3, **characterized in that** the connection element (14) has undercuts (92) in the region of the stiffening ribs (52) of the adapter (16) on the inside of its side walls (80).

5. Fitting device according to one of the preceding claims, **characterized in that** the length of the link axis (30) is slightly greater than the distance between the axial sliding surfaces (50) of the hubs (46), so that the axial sliding surfaces (50) in the installed state thrust with a pretension against the end faces of the link axis (30).

6. Fitting device according to Claim 3, **characterized in that** the adapter (16) has contact surfaces (76) in the lengthwise direction on both sides of the niches (41) on the outside of the side walls (40), which in the installed state lie closely against the inside of the side walls (80) of the connection element (14).

7. Fitting device according to one of the preceding claims, **characterized in that** the flexible tongue (64) is connected to the rear end wall (62) and forms, along with the top wall (42) of the adapter (16), a gap (68), while the key (66) of the side of the flexible tongue (64) facing away from the rear end wall (62) projects outward beyond the flexible tongue (64) and in the installed state reaches through an opening (86) in the top wall (84) of the connection element (14).

8. Fitting device according to Claim 7, **characterized in that** the flexible tongue (64) has at least one projection (70) at its end away from the rear end wall (62), which in the assembled state lies against the inside of the top wall (84) of the connection element (14).

9. Fitting device according to one of the preceding claims, **characterized in that** the rear end wall (62) of the adapter (16) reaches from the top wall (42) to the lower edge of the side walls (40), so that large-sized cross sections (72) of the fitting are achieved.

10. Fitting device according to one of the preceding claims, **characterized in that** securing blocks (60) are provided in recesses (78) at the end on the outside of the side walls (40) facing toward the rear end wall (62), which form installation channels (110) along with the recesses (78) for guide rails (82) at the lower edges of the side walls (80) of the connection element (14), and the installation channels (110) widen toward the rear end wall (62).

## Revendications

1. Dispositif de raccordement qui présente un élément de raccordement (18) fixé à un balai d'essuie-glace (10) suivant une construction en forme de poutre plate et un adaptateur (16) connecté à celui-ci de manière articulée ainsi qu'un élément de connexion (14) connecté à un bras d'essuie-glace (12), dans le profilé duquel élément de connexion, de section transversale en forme de U, l'adaptateur (16) est inséré et fixé par une langue élastique (64) munie d'un bouton (66), disposée sur sa paroi de recouvrement (42), l'élément de raccordement (18) possédant une nervure centrale (28) s'étendant dans la direction longitudinale du balai d'essuie-glace (10), laquelle nervure centrale porte un axe d'articulation (30) faisant saillie au niveau de ses côtés longitudinaux, lequel est monté dans des moyeux flexibles latéralement (46) dans des parois latérales (40) de l'adaptateur (16), **caractérisé en ce que** les parois de l'adaptateur (16), tournées vers l'extérieur, à savoir les parois latérales (40), la paroi de recouvrement (42) et les parois frontales (36, 62), présentent une épaisseur de paroi globale d'au moins deux millimètres et les moyeux (46) sont réalisés sous forme de trous borgnes, dont les surfaces cylindriques forment des surfaces de glissement radiales (48) et dont les surfaces frontales forment des surfaces de glissement axiales (50), qui sont polies à un niveau de brillance élevé et avec une rugosité moyenne arithmétique de Ra < 0,2 µ, et **en ce que** les surfaces de glissement (48, 50) sont les seules surfaces de contact entre l'élément de raccordement (18) et l'adaptateur (16).

2. Dispositif de raccordement selon la revendication 1, **caractérisé en ce que** les moyeux (46) sont disposés dans des raccords de moyeu (44) qui font saillie vers l'intérieur au niveau des côtés intérieurs des parois latérales (40).

3. Dispositif de raccordement selon la revendication 2, **caractérisé en ce que**, dans la région des raccords de moyeu (44) au niveau du côté extérieur des parois latérales (40), sont prévues des niches (41) dans lesquelles sont disposées des nervures de renforcement (52) qui se terminent approximativement en affleurement avec le côté extérieur de la paroi latérale (40) adjacente à la niche (41).

4. Dispositif de raccordement selon la revendication 3, **caractérisé en ce que** l'élément de connexion (14) présente, au niveau des côtés intérieurs de ses parois latérales (80), dans la région des nervures de renforcement (52) de l'adaptateur (16), des dégagements par rainures (92).

5. Dispositif de raccordement selon l'une quelconque des revendications précédentes, **caractérisé en ce que** la longueur de l'axe d'articulation (30) présente un léger surdimensionnement par rapport à la distance entre les surfaces de glissement axiales (50) des moyeux (46), de telle sorte que les surfaces de glissement axiales (50), dans l'état monté, s'appliquent avec une précontrainte contre les surfaces frontales de l'axe d'articulation (30).

6. Dispositif de raccordement selon la revendication 3, **caractérisé en ce que** l'adaptateur (16) possède, dans la direction longitudinale vers les deux côtés des niches (41) au niveau des côtés extérieurs des parois latérales (40), des surfaces de contact (76) qui, dans l'état monté, s'appliquent étroitement contre les côtés intérieurs des parois latérales (80) de l'élément de connexion (14).

7. Dispositif de raccordement selon l'une quelconque des revendications précédentes, **caractérisé en ce que** la langue élastique (64) est connectée à la paroi frontale arrière (62) et forme, avec la paroi de recouvrement (42) de l'adaptateur (16), une fente (68), le bouton (66) faisant saillie vers l'extérieur au-delà de la langue élastique (64), au niveau du côté de la langue élastique (64) opposé à la paroi frontale arrière (62), et, dans l'état monté, s'engageant à travers une ouverture (86) dans la paroi de recouvrement (84) de l'élément de connexion (14).

8. Dispositif de raccordement selon la revendication 7, **caractérisé en ce que** la langue élastique (64) possède, au niveau de son extrémité opposée à la paroi frontale arrière (62), au moins une saillie (70), qui, dans l'état monté, s'applique contre le côté intérieur de la paroi de recouvrement (84) de l'élément de connexion (14).

9. Dispositif de raccordement selon l'une quelconque des revendications précédentes, **caractérisé en ce que** la paroi frontale arrière (62) de l'adaptateur (16) s'étend depuis la paroi de recouvrement (42) jusqu'à l'arête inférieure des parois latérales (40), de telle sorte que l'on obtienne des sections transversales de raccordement de grande surface (72).

10. Dispositif de raccordement selon l'une quelconque des revendications précédentes, **caractérisé en ce qu'**à l'extrémité tournée vers la paroi frontale arrière (62), des blocs de fixation (60) sont prévus sur les côtés extérieurs des parois latérales (40) dans des évidements (78), lesquels blocs de fixation forment avec les évidements (78) des canaux de montage (110) pour des rails de guidage (82) sur les arêtes inférieures des parois latérales (80) de l'élément de connexion (14), les canaux de montage (110) s'élargissant en direction de la paroi frontale arrière (62).
